# NEUE EUROPÄISCHE PATENTSCHRIFT

(11) **EP 2 815 136 B2**
(45) Veröffentlichungstag und Bekanntmachung des Hinweises auf die Entscheidung über den Einspruch: **16.04.2025**
(45) Hinweis auf die Patenterteilung: 20.12.2017
(21) Anmeldenummer: 13703624.0
(22) Anmeldetag: 13.02.2013
(51) Int. Cl.: F16B 2/22, F16B 7/04, F16B 7/18, E05D 15/06

(54) **MONTAGEANORDNUNG**
ASSEMBLY ARRANGEMENT
SYSTÈME DE MONTAGE

(30) Priorität: 15.02.2012 DE 102012101216
(43) Veröffentlichungstag der Anmeldung: 24.12.2014
(73) Patentinhaber: Hettich-Heinze GmbH & Co. KG, 32139 Spenge (DE)
(72) Erfinder: NOLTE, Frank, 49086 Osnabrück (DE)
(74) Vertreter: Dantz, Jan Henning
(86) Internationale Anmeldenummer: PCT/EP2013/052861
(87) Internationale Veröffentlichungsnummer: WO 2013/120891

(56) Entgegenhaltungen:
- US-A- 4 257 716
- US-A- 5 337 987

## Beschreibung

Die vorliegende Erfindung betrifft einen Schiebetürbeschlag nach dem Oberbegriff des Anspruches 1.

Die DE 75 28 036 offenbart die Verbindung mehrerer Profilabschnitte eines Führungsbahnprofils, bei denen Aufnahmenuten für Stoßverbinder vorgesehen sind. Die im Querschnitt trapezförmigen Stoßverbinder können so in die Aufnahmenuten eingeschoben werden, damit dann die Profilabschnitte als Einheit an einem Schrankmöbel montiert werden können. Bei einem solchen Stoßverbinder ist nachteilig, dass dieser nur vor der Montage der Profilabschnitte montiert werden kann, was gerade bei längeren Führungsschienen an Schränken schwierig ist. Zudem kann es beim Einschieben der Stoßverbinder dazu kommen, dass sich ein Grat aufschiebt, der dann verhindert, dass die Profilabschnitte formschlüssig aneinander anliegen.

Die EP 572 936 offenbart eine aus mehreren Profilstücken gebildete Schiene für eine Schiebetür, die über unterhalb der Laufbahn angeordnete Kupplungsstücke miteinander verspannt werden. Hierfür wird in eine Nut an den Profilstücken ein Kupplungsstück eingeschoben, das dann über eine Schneidschraube verspannt wird. Bei einem solchen Verspannen der Profilabschnitte besteht das Problem, dass die Schrauben zu schwach oder zu stark angezogen werden können und dann entweder zu geringe Haltekräfte vorhanden sind oder es entsteht eine Verformung der Profilabschnitte. Trotz der eher aufwändigen Montage sind Probleme beim Verspannen der Profilabschnitte nicht zu vermeiden.

US 4,257,716 offenbart ein Dachrinnensystem, und insbesondere ein rundgeformtes Dachrinnenstück aus Metall mit einer Spritzgussmontage. Die Montageanordnung umfasst aneinander angeordnete Profile, die über jeweils eine Profilverbindung miteinander verbunden sind. Die Profile sind dabei zumindest teilweise fluchtend angeordnet und weisen eine Aufnahme zum Einfügen eines Abschnittes des Profilverbinders auf, der an der Aufnahme klemmend fixierbar ist. Ferner ist eine Gehrungsanordnung an Ecken eines Hauses vorgesehen, die Enden der Profile über Klippverbindungen aufnimmt.

Das Dokument US 5,337,987 zeigt ein System, das eine Montageschiene und eine Vielzahl von Klipps aufweist, die an Oberflächen beispielsweise im Haushalt oder in einer Garage befestigt werden. Die Klipps sind in einer Öffnung der Montageschiene platzierbar und ein Gegenstand derart integrierbar, dass dieser den Klipp und einen gekrümmten Bereich der Montageschiene berührt. Der Klipp kann dann durch eine Schwenkbewegung an der Montageschiene eingerastet werden. Für ein Lösen des Klipps, wird der Klipp von der Montageschiene weg geschwenkt und der Gegenstand kann durch Ziehen entfernt werden.
EP 1 705 327 A offenbart eine aus mehreren Abschnitten gebildete Profilschiene, die in einem Stoßbereich einen Profilverbinder aus zwei zusammensteckbaren Teilen umfasst, die in einer Nut der Profilschiene angeordnet sind.

Es ist daher Aufgabe der vorliegenden Erfindung, einen Schiebetürbeschlag mit zwei an einer Stoßstelle stirnseitig aneinander angeordneten Profilen zu schaffen, der leicht zu montieren ist und eine zuverlässige Ausrichtung der Profile gewährleistet.

Diese Aufgabe wird mit einem Schiebetürbeschlag mit den Merkmalen des Anspruches 1 gelöst.

Erfindungsgemäß ist der Profilverbinder zum Verbinden der Profile durch Einschwenken klemmend an der Aufnahme fixierbar, so dass der Profilverbinder auf einfache Weise montiert werden kann. Eine Montage kann auch bei schon fixierten Profilen erfolgen, die beispielsweise an einem Möbelkorpus festgelegt sind. Dadurch ist es nicht notwendig, die einzelnen Profile zunächst zu einer Einheit zu verbinden und dann die Einheit aus mehreren Profilen, die auch mehrere Meter lang sein kann, zu befestigen. Zudem wird über die klemmende Fixierung des Profilverbinders eine passgenaue Zentrierung der Profile erreicht. Besonders vorteilhaft ist es, wenn die Zentrierung der Profile benachbart zu den Laufbahnen bzw. unterhalb der Laufbahnen erfolgt.

Gemäß einer bevorzugten Ausgestaltung der Erfindung verläuft eine Schwenkachse zum Einschwenken des Profilverbinders parallel zur Längsrichtung der Profile. Dadurch kann eine Montage seitlich erfolgen, um benachbarte Profile auszurichten.

Die Aufnahme ist erfindungsgemäß durch einen hakenförmigen Abschnitt gebildet, in die zwei winklig ausgerichtete federnde Stege des Profilverbinders eingefügt sind. Dadurch kann durch den Profilverbinder ein Toleranzausgleich erfolgen, da die Stege federnd ausgebildet sind und sowohl Toleranzen bei der Herstellung der Profile als auch bei der Ausrichtung der Profile ausgleichen können. Durch die winklige Ausrichtung der Stege lassen sich diese in einem vorbestimmten Bereich zusammendrücken, um dann klemmend in der Aufnahme festgelegt zu werden. Der Profilverbinder kann dabei an den Profilen verrastet gehalten werden.

Gemäß einer weiteren Ausgestaltung ist der Profilverbinder elastischer als die Profile ausgebildet. Dabei können die Profile aus einem gebogenen Stahlblech oder Aluminium hergestellt sein und der Profilverbinder aus einem Kunststoff, beispielsweise aus einem glasfaserverstärkten Kunststoff. Auch andere Materialien können eingesetzt werden.

Besonders vorteilhaft ist es, wenn sowohl der Profilverbinder als auch die Profile aus Strangpressprofilen hergestellt sind. Dadurch können die Herstellkosten reduziert werden. Auch ist dadurch sichergestellt, dass die Profile besser aneinander angepasst sind, wodurch die zur Zentrierung der Profile notwendige Spannung über einen langen Zeitraum aufrechterhalten wird.

Gemäß einer weiteren Ausgestaltung besitzt der Profilverbinder mindestens ein zusätzliches Rastelement, vorzugsweise in Form einer Rastnase oder eines Rasthakens. Der Profilverbinder klickt an der entsprechenden Stelle der Profile hinter einen Vorsprung, in eine Nut oder dergleichen ein. Durch diese zusätzliche Sicherung wird die Montage verbessert und der Profilverbinder ist gegen ein ungewolltes Lösen gesichert. Die Rastverbindung kann auch durch andere Rastprinzipien und an anderen Kontaktstellen zwischen Profil und Profilverbinder realisiert werden. Beispielsweise könnte mindestens einer der federnden Stege des Profilverbinders in einem Kontaktbereich mit Zacken oder Widerhaken aus einem harten Werkstoff, z.B. Stahlblech, versehen sein, die so geformt sind, dass sie sich bei Kontakt in das verhältnismäßig weichere Material des Profils eingraben.

Die Profile sind als Laufprofil für eine Schiebetür ausgebildet und bilden mindestens eine Laufbahn für Laufrollen eines Schiebetürbeschlages aus. Dadurch kann die Befestigung der Profile an einem Schrank effizient erfolgen und im Bereich einer Stoßstelle können die Schiebetüren sanft an entsprechenden Laufrollen an den Profilen abgestützt sein. Zudem nutzen sich die Laufrollen im Bereich der Lauffläche weniger stark ab, wenn an der Stoßstelle keine Spalten oder Stufen vorhanden sind. Für eine gute Abstützung der Laufbahnen kann die Aufnahme für den Profilverbinder unterhalb der Laufbahnen angeordnet sein, so dass eine Durchbiegung der Laufbahnen beim Verfahren der Schiebetüren mindestens verringert wird.

Die Erfindung wird nachfolgend anhand eines Ausführungsbeispiels mit Bezug auf die beigefügten Zeichnungen näher erläutert. Es zeigen:

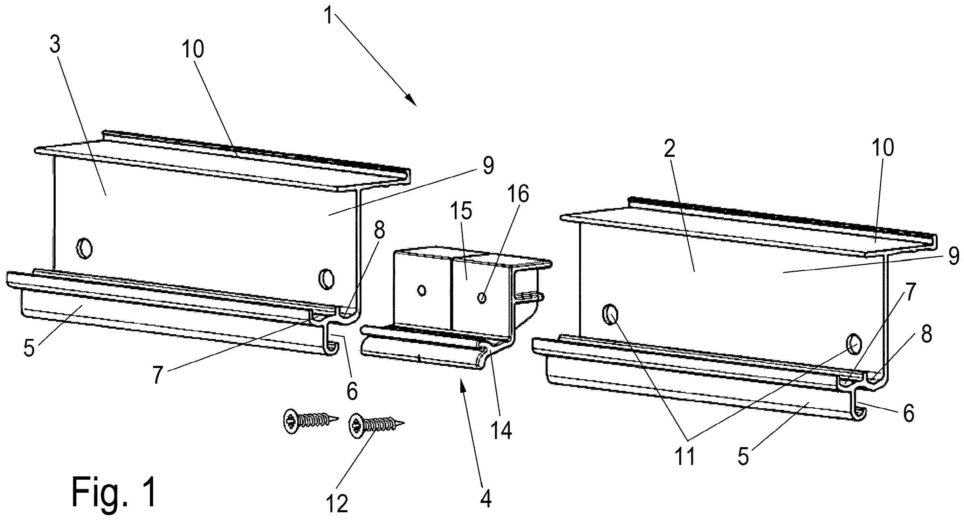

- Figur 1: eine perspektivische Explosionsdarstellung einer erfindungsgemäßen Montageanordnung;
- Figuren 2A und 2B: zwei Ansichten der Montageanordnung der Figur 1 in der montierten Position;
- Figuren 3A bis 3C: mehrere Ansichten der Montageanordnung der Figur 1 bei der Montage;
- Figuren 4A und 4B: zwei Ansichten des Profilverbinders der Montageanordnung der Figur 1,
- Figur 5: eine Detailansicht des Profilverbinders an der Aufnahme der Profile,
- Figur 6A und 6B: eine Montageanordnung nach einer weiteren Ausgestaltung der Erfindung,
- Figur 7A und 7B: zwei Detailansichten des Profilverbinders aus Figur 6A und 6B an der Aufnahme der Profile,
- Figur 8A und 8B: eine Montageanordnung nach einer weiteren Ausgestaltung der Erfindung, und
- Figur 9A und 9B: eine Detailansicht des Profilverbinders aus Figur 8A und 8B an der Aufnahme der Profile

Eine Montageanordnung 1 umfasst zwei Profile 2 und 3, die den gleichen Querschnitt besitzen und über einen Profilverbinder 4 miteinander verbunden werden sollen. Die Profile 2 und 3 sind aus Metall, beispielsweise Aluminium oder gebogenem Stahlblech, hergestellt und umfassen einen hakenförmigen Abschnitt 5, an dem eine Aufnahme 6 ausgebildet ist. Der hakenförmige Abschnitt 5 ist unterhalb von Laufbahnen 7 und 8 angeordnet, die zur Aufnahme der Laufrollen eines Schiebetürbeschlages dienen. Die Laufrollen sind dann in den Laufbahnen 7 und 8 geführt und sollen über eine Stoßstelle zwischen den beiden Profilen 2 und 3 verfahren werden.

Jedes Profil 2, 3 umfasst einen vertikalen Abschnitt 9 und einen oberen horizontalen Abschnitt 10, die an einem Schrankmöbel fixiert werden können. Im Bereich des vertikalen Abschnittes 9 sind ferner Öffnungen 11 für die Montage von Schrauben 12 vorgesehen, mittels denen der Profilverbinder 4 gesichert werden kann.

Der Profilverbinder 4 wird mit einem Abschnitt 14 in die Aufnahmen 6 an den Profilen 2 und 3 eingefügt und dort klemmend fixiert. Der Profilverbinder 4 ist beispielsweise aus Kunststoff hergestellt und umfasst einen winkelförmigen Abschnitt mit einer vertikalen Anlagefläche 15, in der Öffnungen von Schraubkanälen 16 ausgespart ist. Dabei ist der Profilverbinder 4 zu einer Mittelebene symmetrisch ausgebildet und kann so auf jeder Seite mit einem der Profile 2 und 3 verbunden werden.

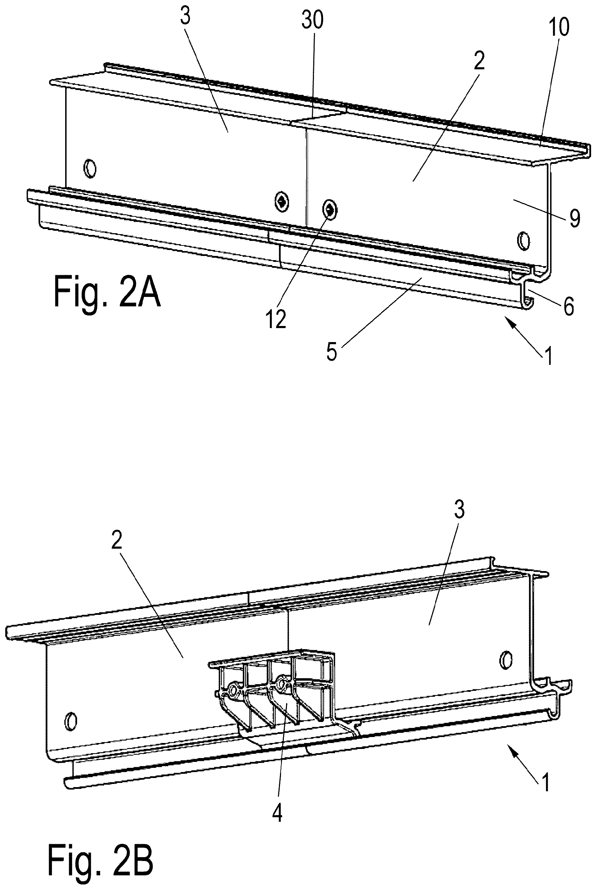

In den Figuren 2A und 2B ist die Montageanordnung 1 mit dem Profilverbinder 4 dargestellt. Die Profile 2 und 3 sind in Längsrichtung fluchtend ausgerichtet und im Bereich einer Stoßstelle 30 über den Profilverbinder 4 miteinander verbunden.

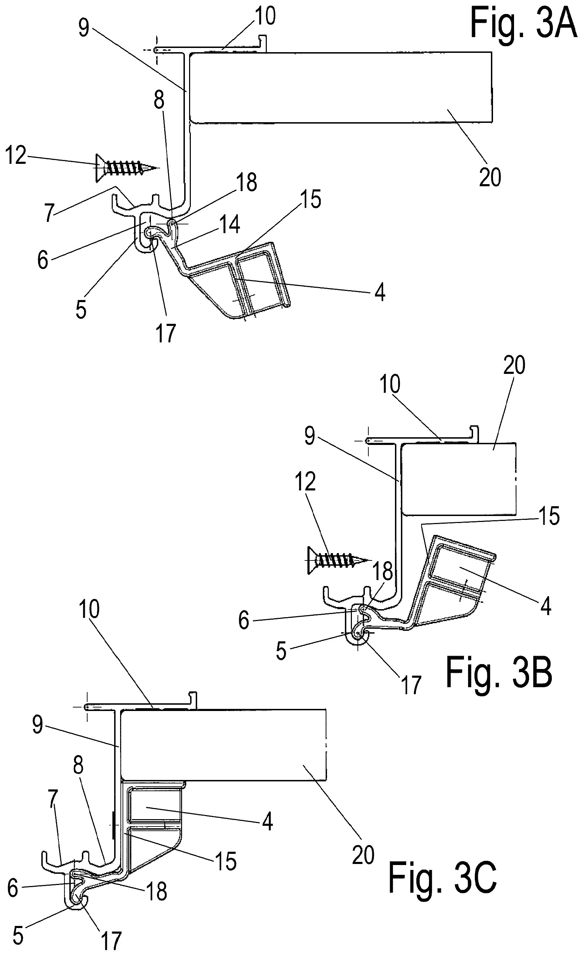

Für die Montage der Profile 2 und 3 können diese zunächst an einem Schrankmöbel montiert werden, wie dies in Figur 3A gezeigt ist. An einer Abdeckplatte 20 eines Schrankmöbels liegt der vertikale Abschnitt 9 und der horizontale Abschnitt 10 der Profile 2 bzw. 3 an und kann dort fixiert werden. Um nun die benachbarten Profile 2 und 3 im Bereich der Stoßstelle 30 miteinander zu verbinden und Stufen oder Spalte im Bereich der Laufbahnen 7 und 8 zu vermeiden, wird der Profilverbinder 4 mit dem Abschnitt 14 im Bereich der Aufnahme 6 positioniert. Der Abschnitt 14 umfasst dabei zwei winklig ausgerichtete federnde Stege 17 und 18, wobei zunächst der untere federnde Steg 17 in den gebogenen Bereich des hakenförmigen Abschnittes 5 eingefügt wird. Anschließend wird der Profilverbinder 4 entsprechend der Figur 3B um eine Achse verschwenkt, die parallel zur Längsrichtung der Profile 2 und 3 ausgerichtet ist. Dabei wird der zweite federnde Steg 18, der in einem Winkel zwischen 30° und 120° zu dem Steg 17 ausgerichtet ist, ebenfalls in die Aufnahme 6 eingefügt, wobei die Stege 17 und 18 zusammengedrückt werden, um klemmend in der Aufnahme 6 fixiert zu werden.

Die endgültige Montageposition ist in Figur 3C dargestellt. Die federnden Stege 17 und 18 liegen klemmend innerhalb der Aufnahme 6 an, die unterhalb der Laufbahnen 7 und 8 ausgebildet ist. Dadurch werden die Profile 2 und 3 im Bereich der Stoßstelle 30 ausgerichtet und stabilisiert, denn der Profilverbinder 4 liegt mit einem vertikalen Abschnitt 15 an dem Abschnitt 9 des Profils 2 bzw. 3 an und grenzt mit einem oberen horizontalen Abschnitt an die Unterseite der Abdeckung 20 des Schrankmöbels. Dabei wird der Profilverbinder 4 über eine in den Schraubkanal 16 eingedrehte Schraube 12 an dem Abschnitt 9 fixiert, so dass bei einer vertikalen Belastung im Bereich der Laufbahnen 7 und 8 der Profilverbinder 4 eine Abstützung gegen ein Verbieten bzw. Verdrehen der Profile 2 und 3 bildet.

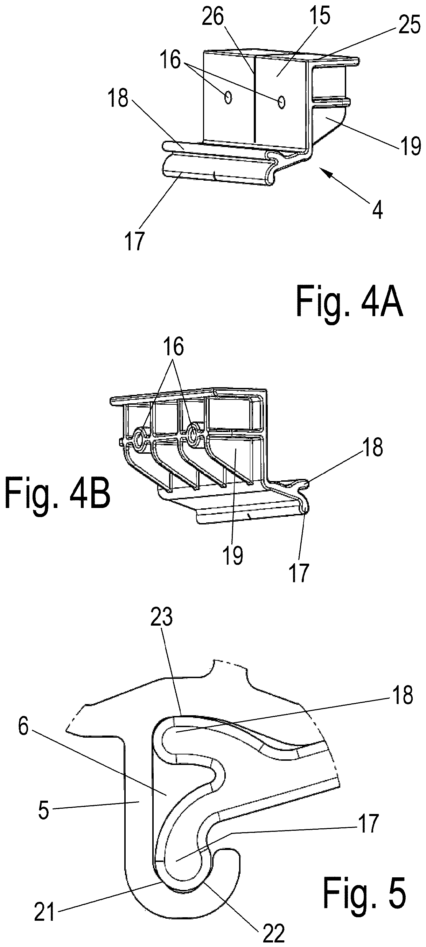

In den Figuren 4A und 4B ist der Profilverbinder 4 im Detail dargestellt. Der winkelförmige Abschnitt mit dem vertikalen Abschnitt 15 und der oberen horizontalen Fläche 25 ist durch eine Vielzahl von Verstärkungsrippen 19 verstärkt, in deren Bereich auch die beiden Schraubkanäle 16 ausgebildet sind. An dem Profilverbinder 4 ist eine mittige Markierung 26 vorgesehen, um eine symmetrische Ausrichtung des Profilverbinders 4 zu der Stoßstelle 30 der Profile 2 und 3 zu erleichtern.

Wie in der vergrößerten Darstellung der Figur 5 zu sehen ist, liegt der untere federnde Steg 17 mit zwei Kontaktstellen 21 und 22 im Bereich des gerundeten hakenförmigen Abschnittes 5 an und kann um diese Kontaktstellen 21 und 22 verschwenkt werden. Der obere federnde Steg 18 liegt an einer Kontaktstelle 23 an der Unterseite der Laufbahnen 7 und 8 an und sorgt für eine klemmende Festlegung des Profilverbinders 4. Die Stege 17 und 18 können dabei Toleranzen zwischen benachbarten Profilen 2 und 3 sowohl hinsichtlich der Profilgeometrie als auch hinsichtlich der Montage der Profile 2 und 3 ausgleichen und sorgen für eine selbstständige Zentrierung.

In dem dargestellten Ausführungsbeispiel werden die Profile 2 und 3 zur Ausrichtung einer aus mehreren Profilen 2 und 3 gebildeten Schiene eines Schiebetürbeschlages eingesetzt. Es ist natürlich auch möglich, den Profilverbinder 4 für andere Einsatzzwecke vorzusehen, bei denen benachbarte Profile im Stoßbereich aneinander fixiert und ausgerichtet werden sollen.

Zudem erfolgt das Verrasten bzw. Verklemmen des Profilverbinders 4 über zwei winklig angeordnete Stege 17 und 18. Es ist natürlich auch möglich, andere Klemmelemente vorzusehen, die ein Einschwenken eines Abschnitts des Profilverbinders an einer Aufnahme ermöglichen.

Auch können die Öffnungen 11 und / oder die Schraubkanäle 16 eine nicht kreisförmige Geometrie aufweisen, und beispielsweise als Langloch ausgeführt sein. Dadurch können die Profilverbinder 4 für unterschiedliche Profile 2, 3 verwendet werden. Die im Beispiel dargestellten Verstärkungsrippen 19 können auch eine andere Geometrie aufweisen, oder die Profilverbinder 4 können auch komplett ohne versteifende Elemente ausgeführt werden.

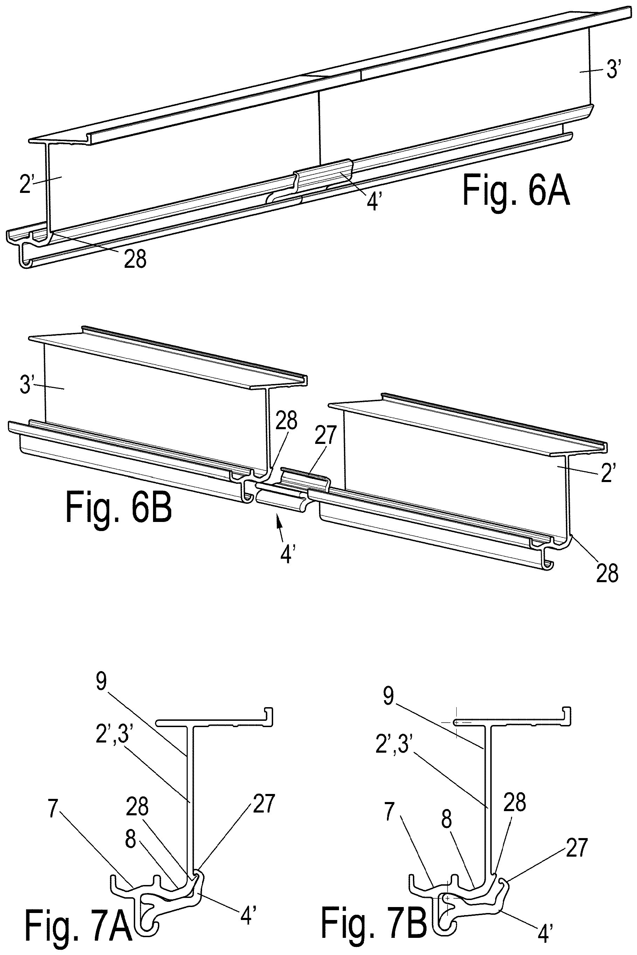

In den Figuren 6A und 6B ist eine Verbindung zwischen modifizierten Profilen 2' und 3' und Profilverbindern 4' ohne Schrauben dargestellt. Dabei werden die Profilverbinder 4' durch mindestens einen Rasthaken 27 an den Profilen 2' und 3' fixiert. Der Profilverbinder 4' weist dabei mindestens einen Rasthaken 27 auf, der so geformt ist, dass er während der Montage an einer Rückseite der Profile 2', 3' hinter einem Vorsprung 28 verrastet, der auf der zu den Laufbahnen 7 und 8 abgewandten Seite an dem vertikalen Abschnitt 9 angeordnet ist. Bis auf den Vorsprung 28 entsprechen die Profile 2' und 3' dem vorangegangen Ausführungsbeispiel.

In Figur 7A und 7B ist die Montage des Profilverbinders 4' im Detail dargestellt. Bei der Montage und Demontage des Profilverbinders 4' wird kein zusätzliches Werkzeug benötigt. Auch kann der Profilverbinder 4' schmaler ausgebildet sein, wodurch weniger Material benötigt wird. Vorteilhaft besteht der Rasthaken 27 und/oder der Vorsprung 28 aus einem elastischen Material. Auch kann eine Fixierung durch Vernietung, Verklebung, Verclipsung oder dergleichen erfolgen. Es muss stets sichergestellt sein, dass die Verbindungselemente keine negativen Auswirkungen auf das Verfahren der Führungsrollen in der Laufbahn 7, 8 haben, für den Einsatzzweck geeignet sind und eine langlebige Verbindung gewährleisten.

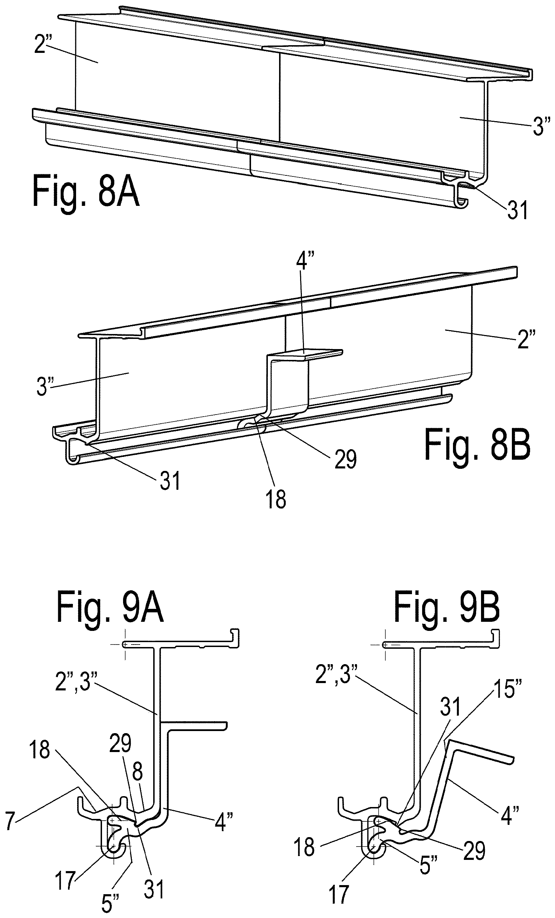

In den Figuren 8A, 8B, 9A und 9B ist eine weitere Ausführungsform der erfindungsgemäßen Montageanordnung mit Profilen 2" und 3" dargestellt, die bis auf einen Vorsprung 31 den Profilen 2 und 3 entsprechen. Ein Profilverbinder 4"weist einen winkelförmigen Abschnitt 15" und einen hakenförmigen Abschnitt 5" mit federnden Stegen 17 und 18 auf. Im Bereich des oberen Steges 18 ist eine Rastaufnahme 29 ausgebildet, die während der Montage hinter einen Vorsprung 31 des Profils 2, 3 einrastet, und somit den Profilverbinder 4" zusätzlich gegen ein ungewolltes Lösen aus den Profilen 2", 3" sichert. Die Rastaufnahme 29 und der Vorsprung 31 können dabei unterschiedlich ausgebildet sein. Auch kann die Rastaufnahme 29 und/oder der Vorsprung 31 im Kontaktbereich eine Verstärkung aufweisen. Dabei kann die Fixierung des Profilverbinders 4" an den Profilen 2", 3" sowohl über Schrauben 12 als auch über andere lösbare oder unlösbare Befestigungsmöglichkeiten hergestellt werden. Auch kann der Profilverbinder 4 bei Bedarf zusätzlich Versteifungselemente aufweisen. Anstelle einer Rastnase oder eines Vorsprunges kann auch eine Ausnehmung vorhanden sein.

Bei den vorstehend beschriebenen Figuren ist aus Vereinfachungsgründen die vorhandene Abdeckplatte des Schrankmöbels nicht dargestellt.

### Bezugszeichenliste

- 1, 1': Montageanordnung
- 2, 2', 2": Profil
- 3, 3', 3": Profil
- 4, 4', 4": Profilverbinder
- 5, 5": hakenförmiger Abschnitt
- 6: Aufnahme
- 7: Laufbahn
- 8: Laufbahn
- 9: Abschnitt
- 10: Abschnitt
- 11: Öffnung
- 12: Schraube
- 14: Abschnitt
- 15: vertikaler Abschnitt
- 15": winkelförmiger Abschnitt
- 16: Schraubkanal
- 17: Steg
- 18: Steg
- 19: Verstärkungsrippe
- 20: Abdeckplatte/Abdeckung
- 21: Kontaktstelle
- 22: Kontaktstelle
- 23: Kontaktstelle
- 25: obere horizontale Fläche
- 26: Markierung
- 27: Rasthaken
- 28: Vorsprung
- 29: Rastaufnahme
- 30: Stoßstelle
- 31: Vorsprung

## Patentansprüche

1. Schiebetürbeschlag mit zwei an einer Stoßstelle (30) stirnseitig aneinander angeordneten Profilen (2, 3; 2', 3'; 2", 3"), die über eine Profilverbindung (4) miteinander verbunden sind, wobei die Profile (2, 3; 2', 3'; 2", 3") zumindest teilweise fluchtend angeordnet sind und eine Aufnahme (6) zum Einfügen eines Abschnittes (14) des Profilverbinders (4, 4', 4") aufweisen, wobei der Profilverbinder (4, 4', 4") durch Einschwenken klemmend an der Aufnahme (6) fixierbar ist, wobei die Profile (2, 3; 2', 3'; 2", 3") als Laufprofile für eine Schiebetür ausgebildet sind und mindestens eine Laufbahn (7, 8) für Laufrollen des Schiebetürbeschlages ausbilden, wobei die Aufnahme (6) für den Profilverbinder (4, 4', 4") unterhalb der mindestens einen Laufbahn (7, 8) angeordnet ist, **dadurch gekennzeichnet, dass** die Aufnahme (6) durch einen hakenförmigen Abschnitt (5) gebildet ist, in die zwei winklig ausgerichtete federnde Stege (17, 18) des Profilverbinders (4, 4', 4") eingefügt sind.

2. Schiebetürbeschlag nach Anspruch 1, **dadurch gekennzeichnet, dass** der Profilverbinder (4, 4', 4") an den Profilen (2, 3; 2', 3'; 2", 3") verrastet gehalten ist.

3. Schiebetürbeschlag nach Anspruch 1 oder 2, **dadurch gekennzeichnet, dass** der Profilverbinder (4, 4', 4") elastischer als die Profile (2, 3; 2', 3'; 2", 3") ausgebildet ist.

4. Schiebetürbeschlag nach einem der vorhergehenden Ansprüche, **dadurch gekennzeichnet, dass** die Profile (2, 3; 2', 3'; 2", 3") aus einem gebogenen Stahlblech oder Aluminium hergestellt sind.

5. Schiebetürbeschlag nach einem der vorhergehenden Ansprüche, **dadurch gekennzeichnet, dass** die Profile (2, 3; 2', 3'; 2", 3") und/oder der Profilverbinder (4, 4', 4") aus einem Strangpressprofil hergestellt sind.

6. Schiebetürbeschlag nach einem der vorhergehenden Ansprüche, **dadurch gekennzeichnet, dass** der Profilverbinder (4, 4', 4") aus Kunststoff hergestellt ist.

7. Schiebetürbeschlag nach Anspruch 2, **dadurch gekennzeichnet, dass** der Profilverbinder (4, 4', 4") mindestens ein zusätzliches Rastelement (27, 29) aufweist, das im montierten Zustand mit einem Bereich der Profile (2, 3; 2', 3'; 2", 3"), insbesondere einem Vorsprung (28), in Wirkverbindung steht.

8. Schiebetürbeschlag nach einem Anspruch 7, **dadurch gekennzeichnet, dass** der Profilverbinder (4, 4', 4") und/oder die Profile (2, 3; 2', 3'; 2", 3") mindestens einen verstärkten Bereich aufweisen.

9. Schiebetürbeschlag nach einem der vorhergehenden Ansprüche, **dadurch gekennzeichnet, dass** der Profilverbinder (4, 4', 4") mit den Profilen (2, 3; 2', 3'; 2", 3") jeweils verschraubt, verhakt, vernietet, verklebt, verclipst oder dergleichen ist.

## Claims

1. A sliding door fitting having two profiles (2, 3; 2', 3'; 2", 3"), which are arranged against one another at the end sides at a butt joint (30), and which are connected to one another via a profile connection (4), wherein the profiles (2, 3; 2', 3'; 2", 3") are arranged at least partially aligned and have a receptacle (6) for inserting a section (14) of the profile connector (4, 4', 4"), whereby the profile connector (4, 4', 4") is fixable in a clamping manner on the receptacle (6) by pivoting in, whereby the profiles (2, 3; 2', 3'; 2", 3") are implemented as running profiles for a sliding door and implement at least one runway (7, 8) for running rollers of the sliding door fitting, whereby the receptacle (6) for the profile connector (4, 4', 4") is arranged below the at least one runway (7, 8), **characterized in that** the receptacle (6) is formed by a hooked section (5), into which two springy webs (17, 18), which are aligned at angles, of the profile connector (4, 4', 4") are inserted.

2. The sliding door fitting according to claim 1, **characterized in that** the profile connector (4, 4', 4") is held by latching on the profiles (2, 3; 2', 3'; 2", 3").

3. The sliding door fitting according to claim 1 or 2, **characterized in that** the profile connector (4, 4', 4") is implemented to be more elastic than the profiles (2, 3; 2', 3'; 2", 3").

4. The sliding door fitting according to one of the preceding claims, **characterized in that** the profiles (2, 3; 2', 3'; 2", 3") are produced from a bent steel plate or aluminum.

5. The sliding door fitting according to one of the preceding claims, **characterized in that** the profiles (2, 3; 2', 3'; 2", 3") and/or the profile connector (4, 4', 4") are produced from an extruded profile.

6. The sliding door fitting according to one of the preceding claims, **characterized in that** the profile connector (4, 4', 4") is produced from plastic.

7. The sliding door fitting according to Claim 2, **characterized in that** the profile connector (4, 4', 4") has at least one additional catch element (27, 29), which is operationally linked in the assembled state to a region of the profiles (2, 3; 2', 3'; 2", 3"), in particular a projection (28).

8. The sliding door fitting according to Claim 7, **characterized in that** the profile connector (4, 4', 4") and/or the profiles (2, 3; 2', 3'; 2", 3") have at least one reinforced region.

9. The sliding door fitting according to one of the preceding claims, **characterized in that** the profile connector (4, 4', 4") is connected to the profiles (2, 3; 2', 3'; 2", 3") by means of screwing, hooking, riveting, gluing clipping or similar means.

## Revendications

1. Ferrure de porte coulissante comprenant deux profilés (2, 3, 2', 3', 2", 3") situés frontalement bout à bout au niveau d'un emplacement de contact (30), qui sont reliés par un organe de liaison de profilés (4), les profilés (2, 3, 2', 3', 2", 3") étant situés au moins partiellement en alignement, et comportant un logement (6) d'insertion d'un segment (14) de l'organe de liaison de profilés (4, 4', 4"), l'organe de liaison de profilés (4, 4', 4") pouvant être bloqué dans le logement d'insertion (6) par introduction par pivotement dans ce logement, les profilés (2, 3, 2', 3', 2", 3") étant réalisés sous la forme de profilés de roulement pour une porte coulissante, et formant au moins une piste de roulement (7, 8) pour des galets de roulement de la ferrure de porte coulissante, le logement de réception (6) de l'organe de liaison de profilés (4, 4', 4") étant situé au-dessous de la piste de roulement (7, 8) **caractérisée en ce que** le logement de réception (6) est formé par un segment en forme de crochet (5) dans lequel sont insérés deux barrettes élastiques orientées angulaire-ment (17, 18) de l'organe de liaison de profilés (4, 4', 4").

2. Ferrure de porte coulissante conforme à la revendication 1,
**caractérisée en ce que**
l'organe de liaison de profilés (4, 4', 4", est maintenu encliqueté sur les profilés (2, 3, 2', 3', 2", 3").

3. Ferrure de porte conforme à la revendication 1 ou 2,
**caractérisée en ce que**
l'organe de liaison de profilés (4, 4', 4") est plus élastique que les profilés (2,3, 2', 3', 2", 3").

4. Ferrure de porte coulissante conforme à l'une des revendications précédentes,
**caractérisée en ce que**
les profilés (2, 3, 2', 3', 2", 3") sont réalisés en une tôle d'acier cintrée ou en aluminium.

5. Ferrure de porte coulissante conforme à l'une des revendications précédentes,
**caractérisée en ce que**
les profilés (2, 3, 2', 3', 2", 3") et/ou l'organe de liaison de profilés (4, 4', 4") est(sont) réalisé(s) à partir d'un profilé extrudé.

6. Ferrure de porte coulissante conforme à l'une des revendications précédentes,
**caractérisée en ce que**
l'organe de liaison de profilés (4, 4', 4") est réalisé en matériau synthétique.

7. Ferrure de porte coulissante conforme à la revendication 2,
**caractérisée en ce que**
l'organe de liaison de profilés (4, 4', 4") comporte au moins un élément d'encliquetage supplémentaire (27, 29) qui, est à l'état monté en liaison fonctionnelle avec une zone des profilés (2, 3, 2', 3', 2", 3"), en particulier une saillie (28).

8. Ferrure de porte coulissante conforme à la revendication 7,
**caractérisée en ce que**
l'organe de liaison de profilés (4, 4', 4") et/ou les profilés (2, 3, 2', 3', 2", 3") comporte(nt) au moins une zone renforcée.

9. Ferrure de porte coulissante conforme à l'une des revendications précédentes,
**caractérisée en ce que**
l'organe de liaison de profilés (4, 4', 4") est respectivement vissé, accroché, rivé, collé, enclipsé ou similaire avec les profilés (2, 3, 2', 3', 2", 3").
